# EUROPÄISCHE PATENTSCHRIFT

(11) **EP 3 024 888 B1**
(45) Veröffentlichungstag und Bekanntmachung des Hinweises auf die Patenterteilung: **28.08.2019**
(21) Anmeldenummer: 13739996.0
(22) Anmeldetag: 22.07.2013
(51) Int. Cl.: C08L 23/06, B65D 41/12

(54) **DICHTUNGSCOMPOUNDS MIT BARRIEREEIGENSCHAFTEN**
SEALING COMPOUNDS WITH BARRIER PROPERTIES
COMPOSÉS D'ÉTANCHÉITÉ À PROPRIÉTÉS BARRIÈRES

(43) Veröffentlichungstag der Anmeldung: 01.06.2016
(73) Patentinhaber: Actega DS GmbH, 28219 Bremen (DE)
(72) Erfinder: EICHLER, Waldemar, 28777 Bremen (DE); WITTENBERG, Rüdiger, 28865 Lilienthal (DE)
(74) Vertreter: Maiwald, Walter
(86) Internationale Anmeldenummer: PCT/EP2013/065436
(87) Internationale Veröffentlichungsnummer: WO 2015/010718

(56) Entgegenhaltungen:
- EP-A1- 1 845 027
- WO-A1-2011/069520
- US-A- 5 731 053

## Beschreibung

Die Erfindung betrifft PVC-freie Polymercompounds , die durch die Kombination von passiver Sauerstoffbarrieretechnologie und Sauerstoff-bindenden Verbindungen (Scavenger) in Dichtungsmassen für Verschlüsse den Schutz von Getränken vor Sauerstoff optimieren.

Sauerstoff-empfindliche Getränke und Lebensmittel haben weltweit eine große wirtschaftliche Bedeutung. An vorderster Stelle sind hier Bier, Wein, Fruchtsäfte und Tee-basierte Erfrischungsgetränke zu nennen. Um diese Füllgüter möglichst lange unverändert hinsichtlich Geschmack und Zusammensetzung aufbewahren zu können, hat die Verpackungsindustrie eine Reihe von Technologien entwickelt. So wird beispielsweise im Falle von Flaschen aus PET und ähnlichen Kunststoffen mit Ein-oder Mehrschichtverbunden gearbeitet, die den Sauerstoffeintrag verringern sollen. Gängige Polymere sind in diesen Fällen spezielle Polyamide oder auch Ethylenvinylalkoholpolymere (EVOH). Als Alternative mit einer passiven Barriere lassen sich in das Flascheninnere äußerst dünne Beschichtungen von Kohlenstoff oder Siliziumoxiden aufbringen. US 8377530 B2 beschreibt auch den Einsatz von niedermolekularen Additiven aus der Klasse der aromatischen Amide.

Bei Glasflaschen mit Metallverschluss werden bevorzugt Barriere-Technologien, wie in EP-0503124 A1 beschrieben, eingesetzt. Daneben finden aber auch sauerstoffzehrende Verbindungen, wie in EP-0328337 B1 beschrieben, Verwendung.

Beide Technologien werden für Dichtungsmassen von Kronkorken eingesetzt, sind aber bisher auf die Verwendung in sogenannten "pry-off" Kronkorken beschränkt.

Es ist vorteilhaft, solche Compounds für Dichtungen von Gefäßverschlüssen zu verwenden, die keine PVC Komponenten, sei es in der Form von PVC im Allgemeinen, sei es in der Form von Weich-PVC im besonderen, enthalten. Bei der üblichen Verbrennung von Haushaltsabfall, entstehen aus Halogenkunststoffen säurehaltige Gase, deren Entweichen in die Atmosphäre schädlich ist. Zudem stören schon geringe Mengen PVC das werkstoffliche Recycling von Kunststoffabfällen. Außerdem erfordern weiche, auf PVC-basierende Dichtungselemente den Einsatz von Weichmachern, die aus gesundheitlichen Gründen ebenfalls bedenklich sind.

Es besteht daher ein Bedarf für Gefäßverschlüsse, die eine Dichtungseinlage auf Polymerbasis aufweisen und eine sauerstoffzehrende Komponente enthalten, aber nicht auf PVC basieren.

Unter einem Polymercompound oder einfach Compound wird hier, wie in der Industrie üblich, eine Abmischung von einem oder mehreren Polymeren mit weiteren Komponenten (z. B. Viskositätseinsteller, Streckmittel, Füller, Pigmente, Antioxidantien, Gleitmittel) verstanden, die zur Einstellung der gewünschten Anwendungseigenschaften dienen. Diese Anwendungseigenschaften betreffen das Verhalten des Compounds von seiner Herstellung, über die Verwendung bei der Fertigung des Gefäßverschlusses (z. B. bei der Einbringung in einen Verschluss-Rohling zur Erzeugung einer Dichtungseinlage) wie auch die Eigenschaften des Verschlusses, bei Abfüllung und Lagerung des Gefäßes und bei dessen bestimmungsgemäßer Verwendung (z. B. Öffnung, Entnahme des Getränks oder Lebensmittels, Wiederverschluss des Gefäßes) durch den Verbraucher.

Aus WO 2011/069520 ist bereits bekannt, speziell für Drehkronenkorken ein PVCfreies Polymercompound einzusetzen, dem eine sauerstoffzehrende Komponente (auch als "Scavenger" bekannt) zugesetzt worden ist. Vorzugsweise handelt es sich hierbei um Sulfitpartikel einer bestimmten mittleren Teilchengröße. Durch den Sulfitgehalt wird eine Verminderung des Sauerstoff-Eintrags erreicht, ohne dass das Compound selber (also abgesehen von seinem Scavenger-Gehalt) bereits bestimmte Barriere-Funktionen haben muss.

Die in WO 2011/069520 genannten Compounds basieren auf Polypropylen und Polyethylen, insbes. LDPE und LLDPE, mit Gehalten an SEBS. SEBS hat keine brauchbaren Barriereeigenschaften. Diese Compounds enthalten erhebliche Anteile an Öl, im Ausführungsbeispiel ist Weissöl mit 34% die größte Einzelkomponente. Der Ölgehalt ist notwendig, um die erforderlichen physikalischen Parameter des Compounds zu erhalten.

Für viele Anwendungen ist ein Ölgehalt in eine Gefäßdichtung jedoch unerwünscht. Öl kann die Migration von Stoffen in und durch die Gefäßdichtung erleichtern, was die Barrierewirkung der Dichtung verringert. Der dadurch ggf. größere Zutritt von Sauerstoff und anderen flüchtigen Stoffen kann die Produkteigenschaften beeinträchtigen.

Zur Unterdrückung solcher Effekte ist zum Beispiel in WO 2011/060803 vorgeschlagen worden, ölfreie Compounds insbes. für fetthaltige Füllgüter einzusetzen. Dabei spielen Barriereeigenschaften, gegebenenfalls verstärkt durch Scavenger-Substanzen, jedoch keine Rolle.

Eine wesentliche Funktion der vorliegend behandelten Compounds ist die Erzeugung von Dichtungseinlagen in Gefäßverschlüssen. Diese sollen nicht nur das Auslaufen des Füllgutes verhindern, sondern es auch vor der Verunreinigung durch Stoffe schützen, denen das gefüllte und verschlossene Gefäß zum Beispiel bei Lagerung und Transport ausgesetzt sein kann. Daneben sind für Drehverschlüsse Additive einzusetzen, die eine leichte Entnahme des Füllguts sowie das problemlose Wiederverschließen ermöglichen.

So soll eine Gefäßdichtung unter anderem verhindern, dass Sauerstoff an das Füllgut gelangt. Eine andere wichtige Funktion ist die Begrenzung des unerwünschten Zutritts von flüchtigen Verbindungen, die beispielsweise aus der Umverpackungen, etwa Schrumpffolie, Kartonagen oder Holzpaletten stammen können. Insbesondere bei in Flaschen abgefüllten und mit Kronkorken oder Kappen verschlossenen Getränken (Bier, Säfte, Mineralwasser) ist es von großer Bedeutung, den Zutritt von TCA (Trichloranisol) und anderen flüchtigen organischen Kohlenstoffverbindungen (VOC's) zu unterdrücken.

In herkömmlichen Gefäßdichtungen erfolgt der Zutritt solcher Substanzen (Sauerstoff, TCA und dgl.) bei verschlossenem Gefäß, weil die Dichtung ihn nicht verhindern kann. Die Schadstoffe wandern (z.B. aufgrund ihrer Löslichkeit im Compound) durch die Dichtung in das Gefäß und gelangen so in das Füllgut.

Unerwünscht ist auch der umgekehrte Effekt, dass nämlich Bestandteile des Füllgutes in die Dichtung eindringen. Das kann z. B. bei ölhaltigen Füllgütern oder aromatisierten Getränken ein Problem sein.

Im Stand der Technik hat sich die Industrie bisher darauf beschränkt, Compounds einzusetzen, die entweder (ohne Zusatz von Scavengern) eine Barriere-Wirkung zeigen (wobei also konzeptionell schon der Eintritt der Schadstoffe in die Dichtung verhindert werden soll), oder einen Scavenger-Zusatz aufweisen (wobei also konzeptionell der Eintritt der Schadstoffe nicht verhindert wird, diese dann aber im Dichtungsmaterial unschädlich gemacht werden sollen). Bisher werden jedoch keine Dichtungseinlagen verwendet, die das Barriere-Konzept mit dem Scavenger-Konzept verbinden - vermutlich, weil man bisher beide Konzepte als Alternativen gesehen hat, die einander ausschließen.

Die Erfindung umfasst daher Compounds, die das Barriere-Konzept mit dem Scavenger-Konzept vorteilhaft kombinieren. Durch die Kombination von passiver Sauerstoffbarrieretechnologie mit Sauerstoff-bindenden Verbindungen (Scavenger) in dem Dichtungsmaterial lässt sich der Schutz von z.B. Getränken vor Sauerstoff optimieren.

So ergeben sich unerwartete Vorteile.
Zum einen lassen sich so Compounds erzeugen, die es ermöglichen, Dichtungen in einem erweiterten Härtebereich zu verwirklichen. Herkömmliche Barrierecompounds in Gefäßverschlüssen sind relativ hart (d. h. die Shore A - bzw. Shore D - Härte ist relativ hoch). Ein größerer Gestaltungsspielraum ist hier vorteilhaft.

Zum anderen zeigt sich, dass die erfindungsgemäß eingesetzten Barriere-Compounds bei Anwesenheit der Scavenger-Partikel eine höhere Absorptionsfähigkeit für Wasser aufweisen, die wiederum zu einer verbesserten Aktivierung der Scavenger-Partikel führt. Hier liegt ein unerwarteter synergistischer Effekt vor, der es ggf. ermöglicht, den wirksamen Gehalt an Scavenger-Partikeln zu verringern, was wiederum nicht nur zu verringerten Kosten, sondern auch zu einer leichteren und flexibleren Verarbeitung führt.

Die erfindungsgemäßen Compounds lassen sich für alle Arten von Flaschenverschlüssen, z.B. Kronkorken, Aluminiumverschlüssen und Kappen (wie etwa Kunststoffkappen mit Innengewinde) verwenden. Für Drehkronenkorken sind sie aufgrund ihrer relativ größeren Härte weniger gut geeignet.

Die erfindungsgemäßen Polymercompounds enthalten eine Scavenger-Komponente, die den Zutritt insbesondere von Sauerstoff unterdrückt.

Als Scavenger eignet sich insbesondere ein anorganisches Sulfit, z. B. Natriumsulfit. Andere bekannte Scavenger wie Ascorbinsäure lassen sich ebenfalls verwenden. Geeignete Scavenger- Materialien sind beispielsweise hinsichtlich Art, Menge und Anwendung in unserer Anmeldung WO 2011/069520 beschrieben, auf die Bezug genommen wird.

Manche dieser Barriere-Compounds basieren auf Gemischen von harten Polyolefinen, insbes. HDPE oder PP bzw. co-PP, mit Butylkautschuk, ohne Zusatz von weiteren Polymeren, die die Härte des Compounds verringern. Im Ausführungsbeispiel 1 wird ein solches Compound beschrieben, bei dem zusätzlich ein Scavenger-Gehalt vorgesehen ist.

Solche Compounds sind relativ hart. Sie eignen sich besonders dann gut, wenn die daraus hergestellte Dichtung nur einmal verwendet wird, etwa bei "pry-off" Kronkorken. Für mehrfach zu benutzende Verschlüsse, also zum Beispiel für wiederverschließbare Gefäße, und bei unebenen und rauen Mündungsrändern am Gefäß wären demgegenüber Dichtungen vorteilhaft, die weicher und flexibler sind.

Für solche Einsatzzwecke eignen sich solche Compounds besser, die weichmachende Polymere enthalten. Solche Compounds sind in den Ausführungsbeispielen 2, 3 und 4 angegeben.Diese Compounds zeigen eine hervorragende Barrierewirkung auch bei mehrfacher Verwendung des Gefäßverschlusses und bei unebenen, rauen und beschädigten Gefäßmündungen.

Es ist daher eine wesentliche Aufgabe der Erfindung, eine zur Herstellung von Gefäßverschlüssen geeignete Dichtungseinlage anzugeben, welche es ermöglicht, den Gefäßverschluss mit einem PVC-freien Dichtungselement auf Polymerbasis zu versehen, welches eine Barriere-Wirkung insbesondere hinsichtlich Sauerstoff und TCA aufweist, und eine sauerstoffzehrende Komponente enthält. Eine wichtige Aufgabe der Erfindung liegt darin, ein Polymercompound anzugeben, das sich zur Herstellung einer solchen Dichtungseinlage eignet.

Der erfindungsgemäße Compound soll die Herstellung von Gefäßverschlüssen ermöglichen, welche einerseits den Anforderungen an Dichtigkeit und Öffnungskräfte genügen und andererseits eine sauerstoffzehrende Komponente enthalten ohne dabei jedoch aus PVC zu bestehen, oder PVC zu enthalten.

Zur Lösung dieser und anderer Aufgaben ist eine erfindungsgemäße Dichtungseinlage für Drehkronenkorken mit den Merkmalen ausgestattet, die in den unabhängigen Ansprüchen definiert sind. Vorteilhafte Ausgestaltungen sind in den Unteransprüchen definiert.

Die erfindungsgemäßen Polymercompounds zeigen eine gute Barrierewirkung gegenüber Sauerstoff, TCA und anderen unerwünschten flüchtigen Substanzen.

Sie sind weicher als vergleichbare, herkömmliche Compounds, was ihre Dichtungswirkung verbessert. Vorzugsweise liegt die Shore D - Härte oberhalb von 20, aber nicht höher als 55.

Der Melt Flow Index der Compounds (MFI bei 190°C und 5 kg) liegt vorzugsweise bei mindestens 5, bevorzugt bei mindestens 10 und besonders bevorzugt bei 13 und darüber. Besonders geeignete Compounds zeigen einen MFI von mehr als 15, mehr als 20 und manche sogar mehr als 25, was sich auf die Verarbeitbarkeit besonders günstig auswirkt.

Die erfindungsgemäßen Compounds bestehen grundsätzlich aus einem Substanzgemisch, das wenigstens ein, vorzugsweise jedoch zwei und mehr verschiedene Polymere und daneben ggf. übliche Zusätze (Antioxidantien, Gleitmittel, Pigment und dergl.) umfasst, wobei dem Substanzgemisch ein Gehalt an Scavenger-Material zugesetzt ist.

Das Compound umfasst ein unvernetztes, (kautschukartiges) Barrierepolymer, wie Butylkautschuk, Polyisopren, Polyisobutylen, SIBS, oder Polybuten.

Zur Einstellung der gewünschten Härte (und anderer Eigenschaften) umfasst das Compound weiterhin vorzugsweise thermoplastische Polymere, insbesondere auf Basis von Polyethylen. Hierfür werden ein oder (vorzugsweise) zwei oder mehr verschiedene Polyethylen-Typen zugesetzt. In bevorzugten Ausführungsformen umfasst das Compound HDPE neben LDPE und/oder LLDPE, wobei ein Compound mit Gehalten an HDPE neben LDPE bevorzugt ist, und bei einigen Ausführungsformen Compounds vorgezogen werden, die kein LLDPE enthalten.

Das Compound kann stattdessen oder zusätzlich einen Gehalt an Polypropylen (PP) und/oder einem Copolymer von Propylen und Ethylen (co-PP) aufweisen.

Es ist grundsätzlich denkbar, als Barrierepolymer SIBS einzusetzen. Dabei sind erfindungsgemäß solche Compounds bevorzugt, die SIBS in Kombination mit Polyolefinen enthalten. In mehr bevorzugten Ausführungsformen werden dafür Polyolefine wie HDPE und LDPE eingesetzt. Der relative Gesamtgehalt an Polyolefinen ist vorzugsweise höher als der an SIBS. In besonders bevorzugten Ausführungsformen liegt der relative Gehalt an SIBS bei oberhalb 5 Gew%, besser bei oberhalb 10 Gew% und unterhalb 30 Gew%. Der relative Gesamtgehalt an Polyolefinen liegt generell bei mindestens 30 Gew%, vorzugsweise bei mindestens 50 Gew% und ggf. bei mindestens 70 Gew% (immer bezogen auf das Gesamtgewicht des fertigen Compounds). Bevorzugte Compounds auf SIBS-Basis haben Shore D-Härten zwischen 30 und 60, beispielsweise zwischen 45 und 55.

Zusätzlich oder alternativ kann das Compound andere Polymere mit elastomeren Eigenschaften enthalten.

Besonders bevorzugt ist es, dem Compound einen Gehalt an Ethylenvinylacetat (EVA) zu geben, und dies ganz besonders dann, wenn das Compound gleichzeitig einen Gehalt an Ethylen-Octen-Block-Copolymer aufweist. Der VA-Gehalt im EVA liegt dabei vorzugsweise im Bereich von 1% bis 30%, meist zwischen 5% und 25%.

Das Compound enthält erfindungsgemäß weniger als 10%, spezieller weniger als 5% und vorzugsweise überhaupt kein Öl, und vorzugsweise auch keine anderen, bei Raumtemperatur flüssigen (organischen) Bestandteile.

Als Scavenger enthält das erfindungsgemäße Compound vorzugsweise Natriumsulfit. Der Gehalt an Scavenger-Material liegt generell bei etwa 1 bis 10%, bezogen auf das Gesamtgewicht des Compounds.

Es ist grundsätzlich möglich, ein erfindungsgemäßes Compound nur aus einem thermoplastischen Polymer geeigneter Härte (insbes. HDPE) und einem Butylkautschuk herzustellen, wobei den beiden Polymeren nur noch der Scavenger und übliche Hilfsstoffe (Gleitmittel und dgl.) zugesetzt werden. In bevorzugten Ausführungsformen besteht ein solches Polymercompound aus HDPE und Butylkautschuk, wobei der Anteil an HDPE größer ist als der an Kautschuk. Solche Compounds sind (im Spektrum der erfindungsgemäßen Compounds) relativ hart und unelastisch; sie eignen sich besonders für weniger anspruchsvolle Einsatzzwecke, z.B. für Einweg-Flaschen.

Für anspruchsvollere Zwecke, insbes. für wieder verschließbare Gefäße, werden demgegenüber Compounds bevorzugt, die weicher und elastischer eingestellt sind. Das kann dadurch erreicht werden, dass eine Grundmischung aus hartem Polymer (z. B. HDPE) und Butylkautschuk mit Zusätzen von weicheren Polymeren versehen wird. Hier kommen insbes. (aber nicht ausschließlich) Ethylen-Octen-(Block)-Copolymere, LDPE und EVA in Betracht, aber auch weichelastische Polypropylen-Copolymere können eingesetzt werden.

Bei den erfindungsgemäßen Gefäßverschlüssen ist das Dichtungselement in ähnlicher Weise als Einlage auf der Innenfläche des Gefäßverschlusses ausgebildet, wie dies bei den bekannten Kronkorken bzw. Schraubkappen auch der Fall ist.

Während man den bekannten Flaschenverschlüssen (Kronkorken und dergleichen) das Dichtungselement meist als Kreisscheibe auf der Innenseite des Gefäßverschlusses ausbildet, kann es bei größeren Gefäßverschlüssen wie gemäß der Erfindung vorteilhaft sein, statt dessen nur einen Ring aus Polymermaterial auszubilden, der im verschlossenen Zustand des Gefäßes an der Gefäßwand im Öffnungsbereich anliegt. Solche ringförmigen Dichtungselemente sind bekannt, werden aber wie ausgeführt bisher ausschließlich aus PVC- und weichmacherhaltigem Material hergestellt, obwohl es auch PU-Materialien gibt, aus denen die oben genannten Dichtungselemente hergestellt werden.

Hierzu kann das in US 5,763,004 beschriebene Verfahren verwendet werden, das durch Bezugnahme in die vorliegende Beschreibung aufgenommen wird,

Grundsätzlich wird gemäß dem erfindungsgemäßen Herstellungsverfahren von einem Gefäßverschluss-Rohling aus Metall ausgegangen, der gegebenenfalls zunächst auf seiner Innenseite mit einem geeigneten Primer vorbehandelt wird. Bei einem Kunststoff Gefäßverschluss ist diese Vorbehandlung nicht nötig.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100 °C und 260 °C vorgelegt wird.

Die Extrusion kann etwa in die Mitte der Rohling-Innenfläche erfolgen, wenn die Dichtungseinlage kreisscheibenförmig ausgebildet sein soll. Die Dosierung des Polymermaterials für die Extrusion erfolgt über das Abstreifen einer definierten Menge des Polymercompounds an einer Düse.

Nachfolgend wird das kreisscheibenförmige Dichtungselement aus dem extrudierten, noch fließfähigen Material durch entsprechende Stempelung (analog dem bekannten SACMI-Verfahren) geformt.

In abgewandelter Form kann das Dichtungselement außerhalb des Verschlusses oder Verschlussrohlings durch Verstempelung eines geeigneten Polymermaterials geformt und anschließend in den Verschluss oder Rohling eingebracht werden. Dieses Verfahren ist ebenfalls durch SACMI für kleine Verschlüsse als outshell-moulding bekannt.

Vorstellbar ist auch die Herstellung einer profilierten Scheibe oder auch einer ringförmigen Struktur im Spritzgussverfahren, die nachfolgend in z.B. einen Metallverschlussrohling eingelegt werden kann.

### Ausführungsbeispiele der Erfindung:

### Beispiel 1:

| | |
|---|---|
| Butylkautschuk | 23 Gew.% |
| HDPE | 68.5 Gew.% |
| Natriumsulfit | 8 Gew.% |
| Erucamid, Pigment | 0.5 Gew.% |
| | |
| MFI (190°C, 5 kg) | 18 |
| Shore D - Härte | 50 |

### Beispiel 2:

| | |
|---|---|
| Butylkautschuk | 20 Gew.% |
| HDPE | 55 Gew.% |
| Ethylen-Octen-Blockcopolymer | 10.5 Gew.% |
| EVA (19% VA) | 6 Gew.% |
| Natriumsulfit | 8 Gew.% |
| Erucamid, Pigment | 0.5 Gew.% |
| | |
| MFI (190°C, 5 kg) | 25.5 |
| Shore D - Härte | 45 |

### Beispiel 3:

| | |
|---|---|
| Butylkautschuk | 17.5 Gew.% |
| HDPE | 54 Gew.% |
| Ethylen-Octen-Blockcopolymer | 10 Gew% |
| EVA (14% VA) | 10 Gew.% |
| Natriumsulfit | 8 Gew.% |
| Erucamid, Pigment | 0.5 Gew% |
| | |
| MFI (190°C, 5 kg) | 14 |
| Shore D - Härte | 44 |

### Beispiel 4:

| | |
|---|---|
| Butylkautschuk | 15 Gew.% |
| HDPE | 51 Gew.% |
| Ethylen-Octen-Blockcopolymer | 15 Gew.% |
| EVA (14% VA) | 10.5 Gew.% |
| Natriumsulfit | 8 Gew.% |
| Erucamid, Pigment | 0.5 Gew.% |
| | |
| MFI (190°C, 5 kg) | 13 |
| Shore D - Härte | 43 |

### Beispiel 5:

| | |
|---|---|
| Butylkautschuk | 20 Gew.% |
| HDPE | 36 Gew.% |
| Ethylen-Octen-Blockcopolymer | 15.5 Gew.% |
| LLDPE | 20 Gew.% |
| Natriumsulfit | 8 Gew.% |
| Erucamid, Pigment | 0.5 Gew.% |
| | |
| MFI (190°C, 5 kg) | 7.5 |
| Shore D - Härte | 40 |

### Beispiel 6:

| | |
|---|---|
| Butylkautschuk | 18 Gew.% |
| HDPE | 30 Gew.% |
| Ethylen-Octen-Blockcopolymer | 15.5 Gew.% |
| LLPDE | 20 Gew.% |
| EVA (14%VA) | 8 Gew. % |
| Natriumsulfit | 8 Gew.% |
| Erucamid, Pigment | 0.5 Gew.% |
| | |
| MFI (190°C, 5 kg) | 6.7 |
| Shore D - Härte | 39 |

### Beispiel 7:

| | |
|---|---|
| HDPE | 30 Gew.% |
| Etylen-Octen-Blockcopolymer | 15.5 Gew.% |
| LDPE | 36 Gew.% |
| LLDPE | 10 Gew.% |
| Natriumsulfit | 8 Gew% |
| Erucamid, Pigment | 0.5 Gew.% |
| | |
| MFI (190°C, 5 kg) | 8.8 |
| Shore D - Härte | 40 |

### Beispiel 8 (nicht erfindungsgemäss):

| | |
|---|---|
| Butylkautschuk | 25 Gew% |
| HDPE 1 | 50 Gew% |
| HDPE 2 | 24,5 Gew% |
| Erucamid, Pigment | 0,5 Gew% |
| | |
| MFI (190°C, 5 kg) | 20 |
| Shore D - Härte | 50 |
| OTR | 447 |

### Beispiel 9 (nicht erfindungsgemäss):

| | |
|---|---|
| SIBS | 25 Gew% |
| HDPE 1 | 50 Gew% |
| HDPE 2 | 24,5 Gew% |
| Erucamid, Pigment | 0,5 Gew% |
| | |
| MFI (190°C, 5 kg) | 18 |
| Shore D-Härte | 50 |
| OTR | 437 |

### Beispiel 10 (nicht erfindungsgemäss):

| | |
|---|---|
| SIBS | 17,5 Gew% |
| HDPE 1 | 37,5 Gew% |
| HDPE 2 | 24,5 Gew% |
| LDPE | 20 Gew% |
| Erucamid, Pigment | 0,5 Gew% |
| MFI (190°C, 5 kg) | 17 |
| Shore D-Härte | 49 |
| OTR | 506 |

### Beispiel 11:

| | |
|---|---|
| Butylkautschuk | 23 Gew% |
| HDPE 1 | 46,5 Gew% |
| HDPE 2 | 22 Gew% |
| Na₂SO₃ | 8 Gew% |
| Erucamid, Pigment | 0,5 Gew% |
| MFI (190°C, 5 kg) | 18 |
| Shore D-Härte | 50 |
| OTR | 503 |

### Beispiel 12:

| | |
|---|---|
| SIBS | 23 Gew% |
| HDPE 1 | 46,5 Gew% |
| HDPE 2 | 22 Gew% |
| Na₂SO₃ | 8 Gew% |
| Erucamid, Pigment | 0,5 Gew% |
| MFI (190°C, 5 kg) | 16 |
| Shore D-Härte | 50 |
| OTR | 494 |

### Beispiel 13:

| | |
|---|---|
| SIBS | 15,5 Gew% |
| HDPE 1 | 35 Gew% |
| HDPE 2 | 22 Gew% |
| LDPE | 19 Gew% |
| Na₂SO₃ | 8 Gew% |
| Erucamid, Pigment | 0,5 Gew% |
| MFI (190°C, 5 kg) | 14 |
| Shore D-Härte | 49 |
| OTR | 572 |

Die hier angegebenen OTR-Werte (cm³/m²d) sind mit einem MOCOn OX-TRAN 2/60 bei 25°C, 100% relative Feuchte gemessen und auf eine Schichtdicke von 100 µm normiert.
HDPE 1 ist ein HDPE mit MFI = 30
HDPE 2 ist ein HDPE mit MFI = 2

Die Polymermaterialien können erfindungsgemäß einer Heissfüllung von bis 100 °C für bis zu 60 min standhalten, ausgehend von einer Heissfüllung von mindestens 60 °C in höchstens 10 min und mindestens 1 min. Die Heissfüllung, ausgehend von 60 °C, kann in Schritten von 5 ° bis hinauf zu 100 °C in 60 min vollzogen werden.

Wahlweise können den Rezepturen der Compounds auch Pigmente, vorzugsweise anorganische Pigmente zugesetzt werden, um eine Pigment-Migration auszuschließen. Es hat sich außerdem gezeigt, dass den Polymercompounds andere Additive wie Wachse, Silikone und insbesondere Treibmittel zugesetzt werden können, um z.B. die Verarbeitung und die Gebrauchseigenschaften zu verbessern.

## Patentansprüche

1. Polymercompound für eine PVC-freie Dichtungseinlage für Gefäßverschlüsse, welches mit mindestens einer sauerstoffzehrenden Verbindung ausgerüstet ist, **dadurch gekennzeichnet, dass** die Shore D Härte des Polymercompounds bei wenigsten 20 liegt und das Polymercompound einen Melt Flow Index (190°C, 5 kg) von mindestens 5 aufweist, wobei das Polymercompound so zusammengesetzt ist, dass das Compound eine Kombination eines kautschukartigen Barrierepolymers wie Butylkautschuk, Polyisopren, Polyisobutylen, SIBS oder Polybuten und Polyolefin, abernicht mehr als 10 Gew.-% Öl umfasst.

2. Polymercompound nach Anspruch 1, **dadurch gekennzeichnet, dass** das Compound eine Shore D Härte von 20 bis 60 und besonders bevorzugt von 40 bis 50 hat.

3. Polymercompound nach Anspruch 1 oder 2, **dadurch gekennzeichnet, dass** das Compound Natriumsulfit als sauerstoffzehrende Verbindung enthält.

4. Polymercompound nach Ansprüchen 1 bis 3, **dadurch gekennzeichnet, dass** das Compound zwischen 1% bis 10% Natriumsulfit, vorzugsweise von 4% bis 8% Natriumsulfit, als sauerstoffzehrende Verbindung enthält.

5. Polymercompound für eine PVC-freie Dichtungseinlage für Gefäßverschlüsse, welches mindestens ein Polyolefin und mindestens ein kautschukartiges Barrierepolymer gemäß Anspruch 1, aber nicht mehr als 10 Gew.-% Öl enthält, wobei das Polymercompound mindestens ein weiteres, anderes Polymer enthält, das die Gesamthärte (Shore D) des Compounds, im Vergleich zu einem entsprechenden Compound ohne das weitere Polymer, verringert, wobei die Shore D-Härte des alle diese Polymere enthaltenden Compounds bei wenigstens 20 liegt und das Compound einen Melt Flow Index (190°C, 5kg) von mindestens 5 aufweist.

6. Polymercompound nach einem der Ansprüche 1 bis 5, **dadurch gekennzeichnet dass** das Compound bis zu 50%, mehr bevorzugt bis zu 40%, besonders bevorzugt bis zu 25% und vorzugsweise mindestens 10%, mehr bevorzugt mindestens 15% und besonders bevorzugt mindestens 20% des kautschukartigen Barrierepolymers gemäß Anspruch 1, enthält.

7. Polymercompound nach einem der Ansprüche 1 bis 6, **dadurch gekennzeichnet, dass** das Compound bis zu 80 Gew.-%, mehr bevorzugt bis 70%, besonders bevorzugt bis zu 60% und vorzugsweise mindestens 30%, mehr bevorzugt mindestens 40% und besonders bevorzugt mindestens 50% HDPE enthält.

8. Polymerccompound nach Ansprüchen 1 bis 7, **dadurch gekennzeichnet, dass** das Compound zwischen 5% bis 25% Low Density Polyethylen, LDPE enthält.

9. Polymercompound nach Ansprüchen 1 bis 8, **dadurch gekennzeichnet, dass** das Compound nicht mehr als 4% und besonders bevorzugt nicht mehr als 1% von Gleitmitteln, enthält.

10. Polymercompound nach Ansprüchen 1 bis 9, **dadurch gekennzeichnet, dass** das Compound nicht mehr als 5 Gew.-% und besonders bevorzugt gar kein Öl enthält.

11. Polymercompound nach Ansprüchen 1 bis 10, **dadurch gekennzeichnet, dass** das Compound bis zu 30% Linear Low Density Polyethylen, LLDPE, vorzugsweise bis zu 10% LLDPE und besonders bevorzugt nicht mehr als 5 Gew.-% LLDPE, enthält.

12. Polymercompound nach einem der Ansprüche 1 bis 11, **dadurch gekennzeichnet, dass** das Compound wenigstens ein Block-Copolymer enthält, wobei das Block-Copolymer vorzugsweise ein Interpolymer von Ethylen mit mindestens einem C₃-C₁₀-alpha-Olefin oder ein Copolymer von Ethylen mit einem C₃-C₂₀-alpha-Olefin gegebenenfalls in Kombination mit anderen ungesättigten Monomeren, ist und vorzugsweise bis zu 25 Gew.-%, mehr bevorzugt bis zu 20 Gew.-% und besonders bevorzugt zwischen 5 Gew.-% und 15 Gew.-% des Compounds ausmacht.

13. Polymercompound nach einem der Ansprüche 1 bis 12, **dadurch gekennzeichnet, dass** das Compound einen Gehalt an EVA aufweist, der vorzugsweise mindestens 5 Gew.-%, mehr bevorzugt mindestens 8 Gew.-% und besonders bevorzugt mindestens 10 Gew.-% ausmacht, wobei das Compound vorzugsweise ebenfalls einen Gehalt an einem Block-Copolymer gemäß Anspruch 12 aufweist.

14. Polymercompound nach einem der Ansprüche 1 bis 3, welches Additive wie Wachse und Silikone enthält.

15. Gefäßverschluss-Dichtungseinlage, ein Polymercompound gemäß einem der Ansprüche 1 bis 14 umfassend.

16. Gefäßverschluss mit einer Dichtungseinlage, die ein Polymercompound gemäß einem der Ansprüche 1 bis 14 umfasst.

17. Verwendung eines Polymercompounds gemäß einem der Ansprüche 1 bis 14 zur Herstellung einer Dichtungseinlage für einen Gefäßverschluss, insbesondere einem Flaschenverschluss oder einer Verschlusskappe, speziell einem Kronkorken.

## Claims

1. A polymer blend for a PVC-free sealing insert for container closures, which is equipped with at least one oxygen-consuming compound, **characterized in that** the Shore D hardness of the polymer blend is at least 20 and the polymer blend has a melt flow index (190°C, 5 kg) of at least 5, wherein the polymer blend is composed in a manner such that the blend comprises a combination of a rubber-like barrier polymer such as butyl rubber, polyisoprene, polyisobutylene, SIBS or polybutene and polyolefin, but no more than 10% by weight of oil.

2. The polymer blend as claimed in claim 1, **characterized in that** the blend has a Shore D hardness of 20 to 60, and particularly preferably of 40 to 50.

3. The polymer blend as claimed in claim 1 or claim 2, **characterized in that** the blend contains sodium sulphite as the oxygen-consuming compound.

4. The polymer blend as claimed in claims 1 to 3, **characterized in that** the blend contains between 1% and 10% of sodium sulphite, preferably from 4% to 8% of sodium sulphite, as the oxygen-consuming compound.

5. A polymer blend for a PVC-free sealing insert for container closures, which contains at least one polyolefin and at least one rubber-like barrier polymer as claimed in claim 1, but no more than 10% by weight of oil, wherein the polymer blend contains at least one further, other polymer which reduces the total hardness (Shore D) of the blend compared with a corresponding blend that does not contain the further polymer, wherein the Shore D hardness of all of these polymer-containing blends is at least 20 and the blend has a melt flow index (190°C, 5 kg) of at least 5.

6. The polymer blend as claimed in one of claims 1 to 5, **characterized in that** the blend contains up to 50%, more preferably up to 40%, particularly preferably up to 25% and advantageously at least 10%, more preferably at least 15% and particularly preferably at least 20% of the rubber-like barrier polymer as claimed in claim 1.

7. The polymer blend as claimed in one of claims 1 to 6, **characterized in that** the blend contains up to 80% by weight, more preferably up to 70%, particularly preferably up to 60% and advantageously at least 30%, more preferably at least 40% and particularly preferably at least 50% HDPE.

8. The polymer blend as claimed in claims 1 to 7, **characterized in that** the blend contains between 5% and 25% of low density polyethylene, LDPE.

9. The polymer blend as claimed in claims 1 to 8, **characterized in that** the blend contains no more than 4% and particularly preferably no more than 1% of slip additives.

10. The polymer blend as claimed in claims 1 to 9, **characterized in that** the blend contains no more than 5% by weight of oil, and particularly preferably no oil.

11. The polymer blend as claimed in claims 1 to 10, **characterized in that** the compound contains up to 30% of linear low density polyethylene, LLDPE, preferably up to 10% of LLDPE, and particularly preferably no more than 5% by weight of LLDPE.

12. The polymer blend as claimed in one of claims 1 to 11, **characterized in that** the compound contains at least one block copolymer, wherein the block copolymer is preferably an interpolymer of ethylene with at least one C₃-C₁₀ alpha-olefin or a copolymer of ethylene with a C₃-C₂₀ alpha-olefin, optionally in combination with other unsaturated monomers, and preferably constitutes up to 25% by weight, more preferably up to 20% by weight and particularly preferably between 5% by weight and 15% by weight of the blend.

13. The polymer blend as claimed in one of claims 1 to 12, **characterized in that** the blend contains a quantity of EVA which is preferably at least 5% by weight, more preferably at least 8% by weight and particularly preferably at least 10% by weight, wherein the blend preferably also comprises a quantity of a block copolymer as claimed in claim 12.

14. The polymer blend as claimed in one of claims 1 to 3, which contains additives such as waxes and silicones.

15. A container closure sealing insert comprising a polymer blend as claimed in one of claims 1 to 14.

16. A container closure having a sealing insert which comprises a polymer blend as claimed in one of claims 1 to 14.

17. Use of a polymer blend as claimed in one of claims 1 to 14 for the production of a sealing insert for a container closure, in particular a bottle closure or a sealing cap, especially a crown cap.

## Revendications

1. Composé polymère, destiné à un insert d'étanchéité exempt de PVC pour des fermetures de récipients, lequel est muni d'au moins un composé consommateur d'oxygène, **caractérisé en ce que** la dureté Shore D du composé polymère se situe au moins à 20 et **en ce que** le composé polymère présente un indice de fluidité à chaud (190°C, 5 kg) d'au moins 5, le composé polymère étant composé de telle sorte que le composé comprenne une association d'un polymère caoutchouteux formant barrière, comme du caoutchouc butyle, du polyisoprène, du polyisobutylène, du SIBS ou du polybutène et de la polyoléfine, mais pas plus de 10 % en poids d'huile.

2. Composé polymère selon la revendication 1, **caractérisé en ce que** le composé présente une dureté Shore D de 20 à 60 et de manière particulièrement préférentielle, de 40 à 50.

3. Composé polymère selon la revendication 1 ou 2, **caractérisé en ce que** le composé contient du sulfite de sodium en tant que composé consommateur d'oxygène.

4. Composé polymère selon les revendications 1 à 3, **caractérisé en ce que** le composé comporte de 1% à 10% de sulfite de sodium, de préférence de 4% à 8% de sulfite de sodium, en tant que composé consommateur d'oxygène.

5. Composé polymère, destiné à un insert d'étanchéité exempt de PVC pour des fermetures de récipients, lequel contient au moins une polyoléfine et au moins un polymère caoutchouteux formant barrière selon la revendication 1, mais pas plus de 10 % en poids d'huile, le composé polymère contenant au moins un autre polymère additionnel, qui réduit la dureté totale (dureté Shore D) du composé en comparaison d'un composé correspondant ne contenant pas le polymère additionnel, la dureté Shore D du composé contenant l'ensemble de ces polymères se situant à au moins 20 et le composé présentant un indice de fluidité à chaud (190°C, 5kg) d'au moins 5.

6. Composé polymère selon l'une quelconque des revendications 1 à 5, **caractérisé en ce que** le composé contient jusqu'à 50 %, de manière plus préférentielle, jusqu'à 40 %, de manière particulièrement préférentielle, jusqu'à 25 % et de préférence, au moins 10 %, de manière plus préférentielle, au moins 15 % et de manière particulièrement préférentielle, au moins 20 % du polymère caoutchouteux formant barrière selon la revendication 1.

7. Composé polymère selon l'une quelconque des revendications 1 à 6, **caractérisé en ce que** le composé contient jusqu'à 80 % en poids, de manière plus préférentielle, jusqu'à 70%, de manière particulièrement préférentielle, jusqu'à 60% et de préférence, au moins 30 %, de manière plus préférentielle, au moins 40 % et de manière particulièrement préférentielle, au moins 50% de HDPE.

8. Composé polymère selon les revendications 1 à 7, **caractérisé en ce que** le composé contient entre 5% et 25% de polyéthylène basse densité, du PEBD.

9. Composé polymère selon les revendications 1 à 8, **caractérisé en ce que** le composé ne contient pas plus de 4% et de manière particulièrement préférentielle, pas plus de 1% de lubrifiants.

10. Composé polymère selon les revendications 1 à 9, **caractérisé en ce que** le composé ne contient pas plus de 5 % en poids et de manière particulièrement préférentielle, pas du tout d'huile.

11. Composé polymère selon les revendications 1 à 10, **caractérisé en ce que** le composé contient jusqu'à 30 % de polyéthylène linéaire basse densité, du PEBDL, de préférence jusqu'à 10% de PEBDL et manière particulièrement préférentielle, pas plus de 5 % en poids de PEBDL.

12. Composé polymère selon l'une quelconque des revendications 1 à 11, **caractérisé en ce que** le composé contient au moins un copolymère séquencé, le copolymère séquencé étant de préférence un interpolymère d'éthylène avec au moins une alpha-oléfine en C₃ à C₁₀ ou un copolymère d'éthylène avec une alpha-oléfine en C₃ à C₂₀, le cas échéant en association avec d'autres monomères insaturés et correspond de préférence à jusqu'à 25 % en poids, de manière plus préférentielle, à jusqu'à 20 % en poids et de manière particulièrement préférentielle, à de 5 % en poids à 15 % en poids du composant.

13. Composé polymère selon l'une quelconque des revendications 1 à 12, **caractérisé en ce que** le composé présente une teneur en EVA qui correspond de préférence à au moins 5 % en poids, de manière plus préférentielle, à au moins 8 % en poids et de manière particulièrement préférentielle, à au moins 10 % en poids, le composé présentant également de préférence une teneur d'un copolymère séquencé selon la revendication 12.

14. Composé polymère selon l'une quelconque des revendications 1 à 3, lequel contient des additifs, comme des cires ou des silicones.

15. Insert d'étanchéité pour une fermeture de récipient, comprenant un composé polymère selon l'une quelconque des revendications 1 à 14.

16. Fermeture de récipient, pourvue d'un insert d'étanchéité qui comprend un composé polymère selon l'une quelconque des revendications 1 à 14.

17. Utilisation d'un composé polymère selon l'une quelconque des revendications 1 à 14 pour la fabrication d'un insert d'étanchéité pour une fermeture de récipient, notamment une fermeture de bouteille ou un capuchon de fermeture, spécialement une capsule couronne.
